# EUROPÄISCHE PATENTSCHRIFT

(11) **EP 0 809 045 B1**
(45) Veröffentlichungstag und Bekanntmachung des Hinweises auf die Patenterteilung: **20.06.2001**
(21) Anmeldenummer: 97105882.1
(22) Anmeldetag: 10.04.1997
(51) Int. Cl.: F16H 48/08

(54) **Zwischenachsdifferential für Kraftfahrzeuge**
Inter-axle differential for a motor vehicle
Différentiel inter-ponts pour véhicule à moteur

(30) Priorität: 24.05.1996 DE 19621102
(43) Veröffentlichungstag der Anmeldung: 26.11.1997
(73) Patentinhaber: MAN Nutzfahrzeuge Aktiengesellschaft, 80976 München (DE)
(72) Erfinder: Schaller, Carl-Viktor, Dr., 82194 Gröbenzell (DE); Greinöcker, Wolfgang, Dipl.-Ing. (FH), 85551 Kirchheim (DE)

(56) Entgegenhaltungen:
- GB-A- 2 182 988
- US-A- 4 543 854

## Beschreibung

Die Erfindung betrifft ein Zwischenachsdifferential für Kraftfahrzeuge gemäß dem Oberbegriff des Patentanspruchs 1.

Aus der US-PS 4,543,854 ist ein Zwischenachsdifferential für Kraftfahrzeuge bekannt, bei dem ein durch ein erstes Abtriebskegelrad hindurch trieblich mit einer Antriebswelle verbundenes Ausgleichskreuz antreibbar ist. Dieses trägt an radial abragenden Zapfen Ausgleichskegelräder mit sphärischer Außenkontur, die von einer zu der Außenkontur der Ausgleichskegelräder komplementär ausgebildeten sphärischen Innenkontur eines Außenringes aufgenommen ist. Die Fixierung des Ausgleichskreuzes auf der Antriebswelle erfolgt über eine innenseitig der Nabe des Ausgleichskreuzes vorgesehene Profilverzahnung. Die bei der Profilverzahnung auftretenden Kerbwirkungen sowie die Materialschwächungen in diesem Bereich der Nabe bewirken eine Reduzierung des von der ersten Welle auf das Ausgleichskreuz übertragbaren Drehmomentes.

Es ist daher Aufgabe der Erfindung, die Funktion eines Zwischenachsdifferentials zu optimieren.

Aus der GB 2 182 988 A ist eine Ausgleichsgetriebeanordnung mit zwei hintereinander geschalteten Ausgleichsgetrieben bekannt. Hierbei ist bei einem der beiden Ausgleichsgetriebe unter anderem neben üblichen Kegel- und Abtriebskegelrädem eine erste Welle vorgesehen, die abschnittsweise mit einem Zwischenträger ausgestattet ist. Dieser Zwischenträger ist gegenüber einem Schaft der ersten Welle zu einem durchmessergrößeren Bund ausgebildet, von welchem die zur drehfreien Anordnung der Kegelräder vorgesehenen Zapfen abragen. Zudem stützt der Bund des Zwischenträgers mit hierzu gebildeten inneren Abstützflächen die auf den Zapfen befindlichen Kegelräder in definierter Distanz zur Außenkontur des übrigen Schaftes der ersten Welle ab. Die Zapfen tragen an ihren freien Enden Halteplatten, welche mit die Kegelräder außenseitig abstützenden äußeren Abstützflächen versehen sind. In genau definierter Positionierung von inneren Abstützflächen des Bundes des Zwischenträgers und äußeren Abstützflächen der Halteplatten sind die Kegelräder solcherart abgestützt und angeordnet, dass sie mit den mit ihnen korrespondierenden Abtriebskegelrädem kämmen können.

Diese Aufgabe wird erfindungsgemäß durch die Merkmale des Anspruchs 1 gelöst.

Durch die bei einem Zwischenachsdifferential erfindungsgemäß gelöste Einteiligkeit einer ersten Welle mit einem Ausgleichskreuz können Fertigungskosten gespart und die ansonsten auftretenden Haltbarkeitsprobleme an einer Profilverzahnung der Nabe des Ausgleichskreuzes vermieden werden. Die einteilig mit dem Ausgleichskreuz gebildete erste Welle im Bereich ihres ersten Schaftabschnittes kann je nach Bedarf entweder durch eine Antriebswelle oder durch eine Abtriebswelle gegeben sein.

Gemäß einer vorteilhaften Ausgestaltung der Erfindung kann der Außenring über eine, seiner stirnseitigen Anlagefläche gegenüberliegend angeordneten stirnseitigen Anlagefläche des ersten und/oder zweiten Abriebskegelrades axial abgestützt und fixiert sein.

Gemäß einer vorteilhaften Ausgestaltung der Erfindung kann der Außenring freischwimmend auf der Außenkontur der Ausgleichskegelräder angeordnet sein und keine Verbindung zum Ausgleichskreuz aufweisen. Dies ermöglicht, daß die betreffenden Gleitflächenteile von Außenring und Ausgleichskegelrädern nur statistisch verteilt miteinander in Kontakt treten. Auf diese Weise können äußerst glatte und verschleißfeste Laufstellen im Kontaktbereich von Außenring und Ausgleichskegelrädern geschaffen werden. Der Außenring ist hierbei ausschließlich über seine stirnseitige Anlagefläche axial abgestützt.

Gemäß einer vorteilhaften Ausgestaltung der Erfindung kann der Außenring einteilig ausgebildet sein. Hierdurch können weitere Fertigungs- und Montagekosten eingespart werden.

Nachstehend ist die erfindungsgemäße Lösung anhand eines in der Zeichnung dargestellten Ausführungsbeispieles näher erläutert.

In der Zeichnung zeigt:

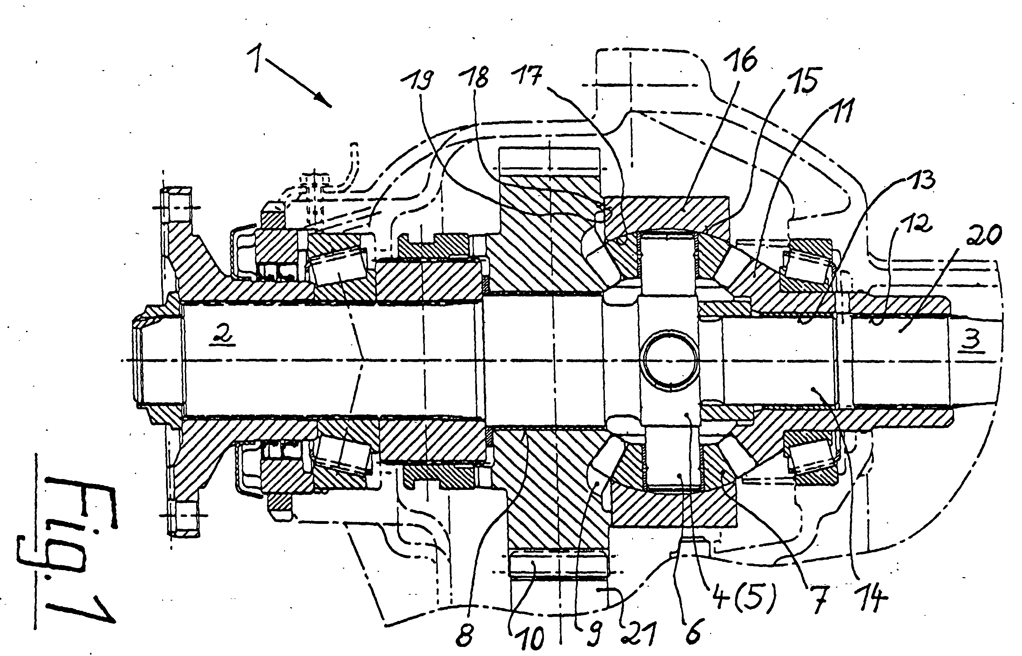

- Fig. 1: ein im Längsschnitt dargestelltes Zwischenachsdifferential eines Doppelachsaggregates eines Kraftfahrzeuges.

In Fig. 1 ist ein an der ersten Tandemachse (eines hier nicht gezeigten Doppelachsaggregates) angeordnetes Zwischenachsdifferential 1 eines Kraftfahrzeuges dargestellt. Das Zwischenachsdifferential 1 ist einerseits über eine erste Welle 2 - der Antriebswelle - mit einem hier nicht gezeigten Getriebe des Kraftfahrzeuges und andererseits über eine zweite Welle 3 - der Abtriebswelle - mit einem hier nicht gezeigten Differential der zweiten Tandemachse verbunden.

Die als Antriebswelle vorgesehene erste Welle 2 des Zwischenachsdifferentials 1 ist im Bereich ihres ersten Schaftabschnittes 4 zu einem Ausgleichskreuz 5 ausgebildet und stellt zusammen mit letzterem ein einstückiges Bauteil dar. Das Ausgleichskreuz 5 kann an dem ersten Schaftabschnitt 4 angeschmiedet oder angegossen sein. Das Ausgleichskreuz 5 weist radial abragende Zapfen 6 auf, an denen drehbar gelagerte Ausgleichskegelräder 7 angeordnet sind. Die Ausgleichskegelräder 7 kämmen antriebsseitig mit einem drehbar auf einem zweiten Schaftabschnitt 8 der ersten Welle 2 angeordneten ersten Abtriebskegelrad 9. Dieses ist in der hier gezeigten Version zusätzlich als Stirnrad 10 ausgebildet, das mit einem zweiten, die erste Tandemachse des Doppelachsaggregates antreibenden Stirnrades 21 kämmt. Abtriebsseitig der Ausgleichskegelräder 7 kämmen diese mit einem zweiten Abtriebskegelrad 11, das über eine Keilnutverzahnung 12 drehfest mit der zweiten Welle 3 - der Abtriebswelle - verbunden ist. Das zweite Abtriebskegelrad 11 ist zusätzlich im vorderen Bereich seiner Durchgangsbohrung 13 drehbar auf einem Schaftende 14 der ersten Welle 2 angeordnet und bildet zusammen mit dem ersten Abtriebskegelrad 9 die Abtriebskegelräder 9, 11 des Zwischenachsdifferentiales 1.

Die Ausgleichskegelräder 7 sind auf herkömmliche Weise mit sphärischen Außenkonturen 15 versehen und von einem ungeteilten Außenring 16 mit einer komplementär zur Außenkontur 15 der Ausgleichskegelräder 7 ausgebildeten, sphärischen Innenkontur 17 fixierend umgeben. Der Außenring 16 ist durch eine, seiner stirnseitigen Anlagefläche 18 gegenüberliegend angeordneten Anlagefläche 19 des ersten Abtriebskegelrades 9 bezüglich der An- und Abtriebswellen 2, 3 axial fixiert. Der Außenring 16 ist auf den Außenkonturen 15 der Ausgleichskegelräder 7 freischwimmend gelagert und weist keine Verbindung zum Ausgleichskreuz 5 auf. Gemäß einer hier nicht gezeigten Ausführungsversion kann der Außenring auch mittels einer, seiner stirnseitigen Anlagefläche gegenüberliegend angeordneten Anlagefläche des zweiten Abtriebskegelrades oder eines anderen Bauteiles axial fixiert sein.

## Patentansprüche

1. Zwischenachsdifferential (1) für Kraftfahrzeuge, mit einem drehfest auf einem ersten Schaftabschnitt (4) einer ersten Welle (2) angeordneten Ausgleichskreuz (5) mit radial abragenden Zapfen (6), an denen Ausgleichskegelräder (7) mit zumindest teilweise sphärischen Außenkonturen (15) drehbar gelagert sind, mit einem frei drehbar auf einem zweiten Schaftabschnitt (8) der ersten Welle (2) gelagerten und mit den Ausgleichskegelrädern (7) kämmenden ersten Abtriebskegelrad (9), mit einem drehfest auf einem endseitigen Schaft (20) einer zweiten Welle (3) angeordneten und mit den Ausgleichskegelrädem (7) kämmenden zweiten Abtriebskegelrad (11), mit einem die Außenkonturen (15) der Ausgleichskegelräder (7) fixierend umhüllenden Außenring (16), der zumindest teilweise eine sphärische, komplementär zu der Außenkontur (15) der Ausgleichskegelräder (7) ausgebildete Innenkontur (17) aufweist, dadurch gekennzeichnet, dass die erste Welle (2) im Bereich ihres ersten Schaftabschnittes (4) zu einem Ausgleichskreuz (5) mit vier unmittelbar vom ersten Schaftabschnitt (4) radial abragenden Zapfen (6) ausgebildet ist.

2. Zwischenachsdifferential nach Anspruch 1, dadurch gekennzeichnet, dass die erste Welle (2) eine Antriebswelle ist.

3. Zwischenachsdifferential nach Anspruch 1, dadurch gekennzeichnet, dass der Außenring (16) über eine, seiner stirnseitigen Anlagefläche (18) gegenüberliegend angeordneten Anlagefläche (19) des ersten und/oder zweiten Abtriebskegelrades (9, 11) axial abgestützt ist.

4. Zwischenachsdifferential nach einem oder mehreren der Ansprüche 1 bis 3, dadurch gekennzeichnet, dass der Außenring (16) freischwimmend auf der Außenkontur (15) der Ausgleichskegelräder (7) angeordnet ist und keine Verbindung zum Ausgleichskreuz (5) hat.

5. Zwischenachsdifferential nach einem der Ansprüche 1 bis 4, dadurch gekennzeichnet, dass der Außenring (16) einteilig ist.

## Claims

1. Interaxie differential (1) for motor vehicles, with a differential spider (5) rigidly mounted on a first shank section (4) of a first shaft (2) and provided with radially projecting pins (6) on which differential bevel gears (7) with at least partially spherical outer contours (15) are slewably supported, with a freely slewable first output bevel gear (9) mounted on a second shank section (8) of the first shaft (2) and meshing with the differential bevel gears (7), with a second output bevel gear (11) rigidly mounted on the end shank (20) of a second shaft (3) and meshing with the differential bevel gears (7), with an outer ring (16) fixingly embracing the outer contours (15) of the differential bevel gears (7), which outer ring (16) shows an inner contour (17) which is at least partially spherical and complementary to the outer contour (15) of the differential bevel gears (7), characterised in that the first shaft (2) in the area of its first shank section (4) is designed as a differential spider (5) with four pins (6) immediately projecting radially from the first shank section (4).

2. Interaxle differential according to Claim 1, characterised in that the first shaft (2) is a drive shaft.

3. Interaxle differential according to Claim 1, characterised in that the outer ring (16) is axially supported via a contact face (19), located opposite its end contact face (18), for the first and/or second output bevel gear(s) (9, 11).

4. Interaxle differential according to one or several of the Claims 1 to 3, characterised in that the outer ring (16) is located on the outer contour (15) of the differential bevel gears (7) in a free-floating manner and has no connection with the differential spider (5).

5. Interaxle differential according to one or several of the Claims 1 to 4, characterised in that the outer ring (16) is made of one piece.

## Revendications

1. Différentiel à arbre intermédiaire (1) pour véhicules automobiles, avec un croisillon d'équilibrage (5) monté d'une façon fixe autour d'une première section (4) d'un premier arbre (2), portant des pivots (6) dépassant en direction radiale, sur lesquels sont montés, en rotation libre, des pignons coniques d'équilibrage (7) présentant, au moins partiellement un contour extérieur sphérique (15), avec un premier pignon de sortie conique (9), monté en rotation libre sur une deuxième section (8) du premier arbre (2) et s'engrenant dans les pignons coniques d'équilibrage (7), avec un deuxième pignon de sortie conique (11) monté fixe en rotation sur un bout d'arbre (20) d'un deuxième arbre (3) et s'engrenant dans les pignons coniques d'équilibrage (7), avec une bague externe (16) entourant et fixant le contour extérieur (15) des pignons coniques de satellite (7), cette bague externe présentant au moins partiellement un contour intérieur (17) sphérique, de forme complémentaire au contour extérieur (15) des pignons coniques d'équilibrage (7),
caractérisé en ce que
le premier arbre (2), dans la zone de sa première section (4) est formé avec un croisillon d'équilibrage (5) ayant quatre pivots (6) dépassant directement de la première section d'arbre (4) en direction radiale.

2. Différentiel à arbre intermédiaire selon la revendication 1,
caractérisé en ce que
le premier arbre (2) est un arbre d'entraînement.

3. Différentiel à arbre intermédiaire selon la revendication 1,
caractérisé en ce que
la bague externe (16) a sa face frontale (18) d'appui en appui axial contre une face d'appui (19) du premier et/ou du deuxième pignon de sortie conique (9, 11).

4. Différentiel à arbre intermédiaire selon l'une ou plusieurs des revendications 1 à 3,
caractérisé en ce que
la bague externe (16) est montée librement flottante sur le contour extérieur (15) des pignons coniques d'équilibrage (7) et n'a aucune liaison avec le croisillon d'équilibrage (5).

5. Différentiel à arbre intermédiaire selon l'une quelconque des revendications 1 à 4,
caractérisé en ce que
la bague externe (16) est réalisée en une seule pièce.
